(19) **Europäisches Patentamt**
**European Patent Office**
**Office européen des brevets**

(11) **EP 4 779 493 A1**

(12) **EUROPEAN PATENT APPLICATION**
published in accordance with Art. 153(4) EPC

(43) Date of publication:
**22.07.2026 Bulletin 2026/30**

(51) International Patent Classification (IPC):
***G06F 16/78*** *(2019.01)*

(21) Application number: **24867441.8**

(86) International application number:
**PCT/CN2024/119416**

(22) Date of filing: **18.09.2024**

(87) International publication number:
**WO 2025/061033 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.09.2023 CN 202311232024**

(71) Applicant: **HUAWEI TECHNOLOGIES CO., LTD.**
**Shenzhen, Guangdong 518129 (CN)**

(72) Inventors:
• **GU, Jiaxi**
**Shenzhen, Guangdong 518129 (CN)**
• **NIU, Minzhe**
**Shenzhen, Guangdong 518129 (CN)**
• **LU, Guansong**
**Shenzhen, Guangdong 518129 (CN)**
• **ZENG, Yihan**
**Shenzhen, Guangdong 518129 (CN)**
• **XU, Hang**
**Shenzhen, Guangdong 518129 (CN)**

(74) Representative: **Maiwald GmbH**
**Engineering**
**Elisenhof**
**Elisenstrasse 3**
**80335 München (DE)**

(54) **VIDEO GROUNDING METHOD AND APPARATUS**

(57) This application provides a video grounding method and apparatus in the field of computer vision, so that training can be performed by using unannotated video data, to reduce annotation costs, greatly reduce labor overheads required for video grounding, and also implement zero-shot video grounding and a very strong generalization capability. The method includes: obtaining a video data set, where the video data set includes video data, and the video data includes a plurality of frames of images; separately obtaining a first video feature and a first text feature of the video data, where the first video feature is a feature extracted from the video data, and the first text feature includes a plurality of words describing each frame of image in the video data; then segmenting the first video feature, to obtain features of a plurality of video clips; mapping the plurality of words to the plurality of video clips, to obtain a text description corresponding to each video clip; and training a video grounding model based on the text description corresponding to each video clip, to obtain a trained video grounding model.

Obtain a video data set — 401

Obtain a first video feature and a first text feature of video data — 402

Segment the first video feature, to obtain features of a plurality of video clips — 403

Map a plurality of words to the plurality of video clips, to obtain a text description corresponding to each video clip — 404

Train a video grounding model based on the text description corresponding to each video clip, to obtain a trained video grounding model — 405

FIG. 4

## Description

This application claims priority to Chinese Patent Application No. 202311232024.5, filed with the China National Intellectual Property Administration on September 21, 2023 and entitled "VIDEO GROUNDING METHOD AND APPARATUS", which is incorporated herein by reference in its entirety.

## TECHNICAL FIELD

This application relates to the field of image processing, and in particular, to a video grounding method and apparatus.

## BACKGROUND

An objective of a temporal video grounding (temporal video grounding) task based on a natural language is that given a query text and a video, a model finds, based on the query text, a video clip that best matches the query text in the video. Generally, existing supervised temporal video grounding techniques require a trained video set with dense manual annotations, and therefore require high data annotation costs.

## SUMMARY

This application provides a video grounding method and apparatus, so that training can be performed by using unannotated video data, to reduce annotation costs, greatly reduce labor overheads required for video grounding, and also implement zero-shot video grounding and a very strong generalization capability.

In view of this, according to a first aspect, this application provides a video grounding method, including: first obtaining a video data set, where the video data set includes video data, and the video data includes a plurality of frames of images; then separately obtaining a first video feature and a first text feature of the video data, where the first video feature is a feature extracted from the video data, and the first text feature includes a plurality of words describing each frame of image in the video data; then segmenting the first video feature, to obtain features of a plurality of video clips; mapping the plurality of words to the plurality of video clips, to obtain a text description corresponding to each video clip; and training a video grounding model based on the text description corresponding to each video clip, to obtain a trained video grounding model, where the video grounding model is used to output information about a corresponding video clip based on an input text.

Therefore, in this implementation of this application, a video feature and a text feature that correspond to the video data may be separately extracted, and the video feature and the text feature are mapped in units of words, to obtain the text description corresponding to each video clip. In addition, video grounding is performed by using video data with a corresponding text description, to obtain a video grounding model that can be used to perform video clip grounding based on an input text, and a training sample does not need to be manually annotated, to reduce annotation costs.

In a possible implementation, the video data set may further include metadata corresponding to the video data, the metadata includes a text description corresponding to the video data, and obtaining the first video feature and the first text feature of the video data includes: Features may be separately extracted via a pre-trained video feature extraction network and text feature extraction network. For example, a feature may be extracted from the video data via the video feature extraction network, to obtain the first video feature, and a feature may be extracted from the text description via the text feature extraction network, to obtain the first text feature.

In this implementation of this application, the video feature and the text feature may be respectively extracted via the pre-trained video feature extraction network and text feature extraction network, to obtain a more accurate video feature and a more accurate text feature.

In a possible implementation, the metadata includes at least one of the following: an audio track, a subtitle, or an optical character recognition OCR result.

In an implementation of this application, the text description may be from the audio track, the subtitle, the OCR, or the like. Optionally, the plurality of frames of images in the video data may be recognized, to obtain a text related to a video. Therefore, required text descriptions can be extracted from video data that carries different text descriptions, that is, video data that carries annotations is obtained, to implement automatic annotation of a sample, and facilitate subsequent supervised learning.

In a possible implementation, segmenting the first video feature, to obtain the plurality of video clips may include: clustering the first video feature, to obtain the plurality of video clips.

In an implementation of this application, video features may be classified by clustering, so that features of a same category are classified into a same video clip.

Optionally, the video feature may be segmented in another manner, for example, boundary detection or window sliding.

In a possible implementation, mapping the plurality of words to the plurality of video clips, to obtain the text description corresponding to each video clip includes: obtaining similarities between the plurality of words and each video clip; and obtaining, based on the similarities, the text description corresponding to each video clip.

In an implementation of this application, during mapping of the words to the video clips, the text description corresponding to each video clip may be determined based on a similarity between each word and the video clip, to determine a text description with higher adaptability to each video clip. This is equivalent to reorganizing the text description of each video clip at a word-level granularity, to obtain a more accurate annotation for each video clip.

In a possible implementation, the plurality of words include at least one noun and/or at least one verb, and before the similarities between the plurality of words and each video clip are obtained, the method may further include: aligning a noun and/or verb in the plurality of words with each frame in the video data. Obtaining the similarities between the plurality of words and each video clip may specifically include: obtaining a similarity between each frame and the noun and/or verb aligned with each frame.

In an implementation of this application, before a word adapted to each video clip is selected, a text and a video frame are further aligned, to improve efficiency of subsequent text and video reorganization.

In a possible implementation, training the video grounding model based on the text description corresponding to each video clip may include: iteratively training the video grounding model based on the text description corresponding to each video clip. Any iterative training process includes: using the video data and a first text description as inputs of a video grounding model updated in a previous iteration, to obtain an output result, where the output result includes information about a video clip corresponding to the first text description, and the text description corresponding to the video data includes the first text description; obtaining a loss value between the output result and information about a second video clip, where the second video clip is the video clip corresponding to the first text description in the plurality of video clips; and updating, based on the loss value, the video grounding model updated in the previous iteration, to obtain a video grounding model updated in the current iteration.

In an implementation of this application, in a training process, the text and the video data may be used as inputs of the video grounding model, a loss value between predicted information that is of a video clip and that is output by the video grounding model and information about a video clip corresponding to the text is calculated, and the model is updated based on the loss value, to implement supervised learning.

In a possible implementation, the video grounding model updated in the previous iteration may be used to: extract a feature from the video data, to obtain a second video feature, for example, extract the feature from the video data via the pre-trained video feature extraction network; extract a feature from the first text description, to obtain a second text feature, for example, via; fuse the second video feature and the second text feature according to an attention mechanism, to obtain a fused feature; and use the fused feature as an input of an output layer, to obtain the output result.

In an implementation of this application, the video grounding model may fuse the video feature and the text feature according to the attention mechanism, and the text description and the video feature can be aligned more effectively according to the attention mechanism. In addition, the text feature and the video feature may be extracted via the pre-trained video feature extraction network and/or text feature extraction network, so that a more effective feature can be extracted, to improve model convergence efficiency.

In a possible implementation, the fusing the second video feature and the second text feature according to the attention mechanism, to obtain the fused feature may include: extracting context information from the first video feature, to obtain a context feature; and fusing the context feature and the second text feature according to the attention mechanism, to obtain the fused feature.

In this implementation of this application, context information in a video feature may be further extracted, to obtain a context feature that can more accurately describe a feature of the video data. During subsequent fusion, the context feature and the second text feature may be fused, to obtain a more accurate fused feature.

According to a second aspect, this application provides a video grounding method, including: first obtaining video data and a query text; and then, using the video data and the query text as inputs of a trained video grounding model, and outputting information about a query video, where the query video is a video clip corresponding to the query text in the video data, the trained video grounding model is used to extract features from the video data and the query text respectively, to obtain a third video feature and a third text feature, fuse the third video feature and the third text feature according to an attention mechanism, use a fused feature as an input of an output layer, and output the information about the query video.

In an implementation of this application, the video grounding model may implement zero-slot grounding on the input video data and query text. That is, video grounding does not need to be performed by using a same video or a same type of video. The video grounding model has very strong generalization.

Optionally, for a training process of the foregoing trained video grounding model, refer to the training process in any one of the first aspect or the optional implementations of the first aspect. Details are not described herein again.

According to a third aspect, this application provides a video grounding apparatus, including:

an obtaining module, configured to obtain a video data set, where the video data set includes video data;
a feature extraction module, configured to obtain a first video feature and a first text feature of the video data, where the first text feature includes a plurality of words describing each frame of image in the video data;

a segmentation module, configured to segment the first video feature, to obtain a plurality of video clips;

a reorganization module, configured to map the plurality of words to the plurality of video clips, to obtain a text description corresponding to each video clip; and

a training module, configured to train a video grounding model based on the text description corresponding to each video clip, to obtain a trained video grounding model, where the video grounding model is used to output information about a corresponding video clip based on an input text.

In a possible implementation, the video data set further includes metadata corresponding to the video data, the metadata includes a text description corresponding to the video data, and the feature extraction module is specifically configured to: extract a feature from the video data via a video feature extraction network, to obtain the first video feature; and extract a feature from the text description via a text feature extraction network, to obtain the first text feature.

In a possible implementation, the metadata includes at least one of the following: an audio track, a subtitle, or an optical character recognition OCR result.

In a possible implementation, the segmentation module is specifically configured to cluster the first video feature, to obtain the plurality of video clips.

In a possible implementation, the reorganization module is specifically configured to: obtain similarities between the plurality of words and each video clip; and obtain, based on the similarities, the text description corresponding to each video clip.

In a possible implementation, the plurality of words include at least one noun and/or at least one verb, and the apparatus may further include:

an alignment module, configured to: before the similarities between the plurality of words and each video clip are obtained, align a noun and/or verb in the plurality of words with each frame in the video data.

The reorganization module is specifically configured to obtain a similarity between each frame and the noun and/or verb aligned with each frame.

In a possible implementation, the training module is specifically configured to iteratively train the video grounding model based on the text description corresponding to each video clip. Any iterative training process includes:

using the video data and a first text description as inputs of a video grounding model updated in a previous iteration, to obtain an output result, where the output result includes information about a video clip corresponding to the first text description, and the first text description is a text description corresponding to the video data; obtaining a loss value between the output result and information about a second video clip, where the second video clip is the video clip corresponding to the first text description in the plurality of video clips; and updating, based on the loss value, the video grounding model updated in the previous iteration, to obtain a video grounding model updated in the current iteration.

In a possible implementation, the video grounding model updated in the previous iteration is specifically used to: extract a feature from the video data, to obtain a second video feature; extract a feature from the first text description, to obtain a second text feature; fuse the second video feature and the second text feature according to an attention mechanism, to obtain a fused feature; and use the fused feature as an input of an output layer, to output the output result.

In a possible implementation, the video grounding model updated in the previous iteration is specifically used to: extract context information from the first video feature, to obtain a context feature; and fuse the context feature and the second text feature according to an attention mechanism, to obtain the fused feature.

According to a fourth aspect, this application provides a video grounding apparatus, including:

an input module, configured to obtain video data and a query text; and

a grounding module, configured to use the video data and the query text as inputs of a trained video grounding model, and output information about a query video, where the query video is a video clip corresponding to the query text in the video data, the trained video grounding model is used to extract features from the video data and the query text respectively, to obtain a third video feature and a third text feature, fuse the third video feature and the third text feature according to an attention mechanism, use a fused feature as an input of an output layer, and output the information about the query video.

In a possible implementation, the trained video grounding model is a model obtained by training according to any one of the first aspect or the optional implementations of the first aspect.

For effects implemented in any one of the optional implementations of the third aspect and the fourth aspect, refer to the description of any one of the optional implementations of the first aspect or the second aspect. Details are not described herein again.

According to a fifth aspect, an embodiment of this application provides a video grounding apparatus, including a processor and a memory. The processor and the memory are interconnected through a line, and the processor invokes program code in the memory to perform a processing-related function in the method of any optional implementation of the first aspect. Optionally, the video grounding apparatus may be a chip.

According to a sixth aspect, an embodiment of this application provides a video grounding apparatus. The video grounding apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any one of the first aspect or the optional implementations of the first aspect.

According to a seventh aspect, an embodiment of this application provides a video grounding apparatus, including a processor and a memory. The processor and the memory are interconnected through a line, and the processor invokes program code in the memory to perform a processing-related function in the method of any optional implementation of the second aspect. Optionally, the video grounding apparatus may be a chip.

According to an eighth aspect, an embodiment of this application provides a video grounding apparatus. The video grounding apparatus may also be referred to as a digital processing chip or a chip. The chip includes a processing unit and a communication interface. The processing unit obtains program instructions through the communication interface, and when the program instructions are executed by the processing unit, the processing unit is configured to perform a processing-related function in any one of the second aspect or the optional implementations of the second aspect.

According to a ninth aspect, an embodiment of this application provides a computer-readable storage medium including instructions. When the instructions are run on a computer, the computer is enabled to perform the method according to any optional implementation of the first aspect or the second aspect.

According to a tenth aspect, an embodiment of this application provides a computer program product including instructions. When the instructions are run on a computer, the computer is enabled to perform the method in any optional implementation of the first aspect or the second aspect.

## BRIEF DESCRIPTION OF DRAWINGS

FIG. 1 is a diagram of a system architecture according to this application;

FIG. 2 is a diagram of another system architecture according to this application;

FIG. 3 is a diagram of an application scenario of video grounding according to this application;

FIG. 4 is a schematic flowchart of a video grounding method according to this application;

FIG. 5 is a schematic flowchart of another video grounding method according to this application;

FIG. 6 is a schematic flowchart of another video grounding method according to this application;

FIG. 7 is a schematic flowchart of another video grounding method according to this application;

FIG. 8 is a schematic flowchart of another video grounding method according to this application;

FIG. 9 is a schematic flowchart of another video grounding method according to this application;

FIG. 10 is a diagram of a structure of a video grounding apparatus according to this application;

FIG. 11 is a diagram of a structure of a video grounding apparatus according to this application;

FIG. 12 is a diagram of a structure of another video grounding apparatus according to this application;

FIG. 13 is a diagram of a structure of another video grounding apparatus according to this application; and

FIG. 14 is a diagram of a structure of a chip according to an embodiment of this application.

## DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person skilled in the art based on embodiments of this application without creative efforts shall fall within the protection scope of this application.

First, for ease of understanding, related terms and concepts in this application are described.

(1) Neural network

A neural network may include a neuron. The neuron may be an operation unit that uses $x_s$ and an intercept 1 as inputs. An output of the operation unit may be shown in Formula (1-1):

$$h_{W,b}(x) = f(W^T x) = f(\sum_{s=1}^{n} W_s x_s + b) \quad (1\text{-}1)$$

s=1, 2, ..., n, n is a natural number greater than 1, $W_s$ is a weight of $x_s$, and $b$ is an offset of the neuron. $f$ is an activation function (activation functions) of the neuron, and is used to introduce a nonlinear feature into the neural network to convert an input signal in the neuron into an output signal. The output signal of the activation function may be used as an input of a next convolutional layer, and the activation function may be a sigmoid function. The neural network is a network constituted by linking a plurality of single neurons together. To be specific, an output of a neuron may be an input of another neuron. An input of each neuron may be connected to a local receptive field of a previous layer to extract a feature of the local receptive field. The local receptive field may be a region including several neurons.

(2) Deep neural network

The deep neural network (deep neural network, DNN) is also referred to as a multi-layer neural network, and may be understood as a neural network having a plurality of hidden layers. Based on positions of different layers, neural network layers inside the DNN may be classified into three types: an input layer, a hidden layer, and an output layer. Generally, the 1st layer is the input layer, the last layer is the output layer, and a layer between the 1st layer and the last layer is the hidden layer. Layers are fully connected. In other words, any neuron at the ith layer is necessarily connected to any neuron at the (i+1)th layer.

Although the DNN seems complex, work at each layer is not complex, and in brief, is described in the following linear relationship expression: $\vec{y} = \alpha(w\vec{x} + \vec{b})$, where $\vec{x}$ is an input vector, $\vec{y}$ is an output vector, $\vec{b}$ is an offset vector, w is a weight matrix (also referred to as a coefficient), and $\alpha()$ is an activation function. Such a simple operation is performed on the input vector $\vec{x}$ at each layer, to obtain the output vector $\vec{y}$. Because there are a large quantity of DNN layers, there are also a large quantity of coefficients W and offset vectors $\vec{b}$. These parameters are defined in the DNN as follows: The coefficient w is used as an example. It is assumed that in a three-layer DNN, a linear coefficient from the 4th neuron at the 2nd layer to the 2nd neuron at the 3rd layer is defined as $W_{24}^3$. The superscript 3 represents a layer at which the coefficient W is located, and the subscript corresponds to an output 3rd-layer index 2 and an input 2nd-layer index 4.

In conclusion, a coefficient from the kth neuron at the (L-1)th layer to the jth neuron at the Lth layer is defined as $W_{jk}^L$.

It should be noted that the input layer has no parameter W. In the deep neural network, more hidden layers make the network more capable of describing a complex case in the real world. Theoretically, a model with more parameters has higher complexity and a larger "capacity". It indicates that the model can complete a more complex learning task. Training the deep neural network is a process of learning a weight matrix, and a final objective of the training is to obtain a weight matrix of all layers of the trained deep neural network (a weight matrix formed by vectors *W* at many layers).

(3) Convolutional neural network

The convolutional neural network (convolutional neuron network, CNN) is a deep neural network with a convolutional structure. The convolutional neural network includes a feature extractor that includes a convolutional layer and a subsampling layer, and the feature extractor may be considered as a filter. The convolutional layer is a neuron layer that is in the convolutional neural network and at which convolution processing is performed on an input signal. At the convolutional layer of the convolutional neural network, one neuron may be connected only to some adjacent-layer neurons. One convolutional layer usually includes several feature planes, and each feature plane may include some neurons that are in a rectangular arrangement. Neurons in a same feature plane share a weight, and the weight shared herein is a convolution kernel. Weight sharing may be understood as that an image information extraction manner is irrelevant to a location. The convolution kernel may be initialized in a form of a random-size matrix. In a process of training the convolutional neural network, the convolution kernel may obtain an appropriate weight through learning. In addition, benefits directly brought by weight sharing are that connections between layers of the convolutional neural network are reduced, and an overfitting risk is reduced.

Generally, the convolutional neural network or the convolutional layer may be used for feature extraction. Feature extraction steps described below in this application, such as a video encoder described below, may be performed by a CNN or a neural network including a convolutional layer.

(4) Multilayer perceptron (multilayer perceptron, MLP)

The multilayer perceptron, also referred to as a multilayer perceptron, is a feed-forward artificial neural network model that maps an input to a single output.

(5) Transformer

A transformer structure is a feature extraction network (similar to a convolutional neural network) that includes an encoder and a decoder. Certainly, in some cases, the transformer structure may not include an encoder, but includes a decoder.

The encoder performs feature learning in a global receptive field through self-attention, for example, a feature of a pixel.

The decoder learns a feature of a required module through self-attention and cross-attention, for example, a feature of an output box.

(6) Self-attention model (self-attention model)

The self-attention model means to effectively encode sequence data (for example, natural corpus "Your phone is very good") into several multi-dimensional vectors, to facilitate numerical operation. The multi-dimensional vectors combine information about a similarity between elements in the sequence, and the similarity is referred to as self-attention.

(7) Attention mechanism

The attention mechanism can quickly extract an important feature of sparse data. The attention mechanism occurs between an encoder and a decoder or between an input sentence and a generated sentence. A self-attention mechanism in a self-attention model occurs inside a coding matrix or an output sequence, and can extract a connection between words that are away from each other in a same sentence, for example, a syntactic feature (phrase structure). The self-attention mechanism provides, through QKV, an effective modeling manner for capturing global context information. It is assumed that an input is Q (query) and a context is stored in a form of a key-value pair (K, V). In this case, the attention mechanism is actually a mapping function from the query to a series of key-value pairs (key, value). The attention function may be essentially described as mapping from the query (query) to a series of (key-value) pairs. The attention essentially assigns a weight coefficient to each element in a sequence, which can also be understood as soft addressing. If each element in the sequence is stored in a form of (K, V), the attention completes addressing by calculating a similarity between Q and K. The calculated similarity between Q and K reflects importance of the extracted V value, namely, a weight. Then, a final eigenvalue is obtained through weighted summation.

Calculation of attention mainly includes three steps. The first step is to calculate a similarity between query and each key to obtain a weight. Common similarity functions include dot product, concatenation, and perceptron. The second step is to use a softmax function (normalization can be performed to obtain a probability distribution whose weights sum to 1; and in addition, a weight of an important element can be highlighted by using the softmax function) to perform normalization on the wights. Finally, weighted summation operation is performed on the weights and corresponding key values, to obtain the final feature value. A specific calculation formula may be as follows:

$$Attention(Q,K,V) = softmax(\frac{QK^T}{\sqrt{d}}) \cdot V,$$

where
d is a dimension of the matrix QK.

In addition, the attention includes self-attention and cross-attention. The self-attention may be understood as special attention, that is, inputs of QKV are consistent. Inputs of QKV in the cross-attention are inconsistent. The attention means to use a similarity (for example, an inner product) between features as a weight to integrate a queried feature as an updated value of a current feature. The self-attention is attention extracted based on focus of a feature map itself.

For convolution, a setting of a convolutional kernel limits a size of a receptive field. As a result, a network usually requires a plurality of layers to be stacked to focus on the entire feature map. The self-attention has an advantage of global focus, allowing global spatial information of the feature map to be obtained through simple query and assignment. A special point of the self-attention in a query key value (query key value, QKV) model is that the inputs corresponding to QKV are consistent.

(8) Loss function

In a process of training a deep neural network, because it is expected that an output of the deep neural network is as close as possible to a value that actually needs to be predicted, a current predicted value of the network and an actually expected target value may be compared, and then a weight vector of each layer of neural network is updated based on a difference between the current predicted value and the target value (certainly, there is usually an initialization process before the first update, to be specific, parameters are preconfigured for all layers of the deep neural network). For example, if the predicted value of the network is large, the weight vector is adjusted to decrease the predicted value, and adjustment is continuously performed, until the deep neural network can predict the actually expected target value or a value that more approximates the actually expected target value. Therefore, "how to obtain a difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the deep neural network is a process of minimizing the loss as much as possible. The loss function may generally include mean square error, cross entropy, logarithm, and exponential loss functions. For example, the square error may be used as a loss function, and is defined as $mse = \frac{1}{N}\sum_{n=1}^{N}(y_n - \hat{y}_n)^2$. Specifically, a specific loss function may be selected according to an actual application scenario.

(9) Back propagation algorithm

In a training process, a neural network may correct a value of a parameter of an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

(10) Supervised learning

The supervised learning is a training manner/-learning manner in machine learning (machine learning), and is a process in which a machine learns a large amount of annotated sample data, trains a model, and enables the model to obtain a corresponding output based on an input.

Generally, the supervised learning requires a large amount of annotated data, that is, data carrying annotations. More annotated data enables a better algorithm obtained through machine learning, and a higher capability of selecting a correct answer from input data. It can be understood that the supervised learning is to find a relationship between the input and the output. For example, an image or text is input, and a classification feature or a segmentation feature is output.

(11) Neural machine translation (neural machine translation)

The neural machine translation is a typical task of natural language processing. This task is a technology in which given a sentence in a source language, a corresponding sentence in a target language is output. In a common neural machine translation model, words in sentences in the source language and the target language are encoded into vectors for representation, and associations between words and between sentences are calculated in vector space, to perform a translation task.

(12) Pre-trained language model (pre-trained language model, PLM)

The pre-trained language model is a natural language sequence encoder that encodes each word in a natural language sequence into a vector for representation, to perform a prediction task. Training of the PLM includes two stages, namely, a pre-training (pre-training) stage and a fine-tuning (fine-tuning) stage. In the pre-training stage, the model is trained on a large scale of unsupervised texts for a language model task, to learn a word representation. In the fine-tuning stage, the model is initialized by using parameters learned in the pre-training stage, and is trained in a few steps on downstream tasks (Downstream Task) such as text classification (text classification) and sequence annotation (sequence labeling), so that semantic information obtained through pre-training can be successfully migrated to the downstream tasks.

(13) Automatic machine learning (AutoML)

The automatic machine learning means designing a series of advanced control systems to operate a machine learning model, so that the model can automatically learn an appropriate parameter and configuration without manual intervention. In a learning model based on a deep neural network, automatic computational learning mainly includes network architecture search and global parameter setting. The network architecture search is used to enable, based on data, a computer to generate a neural network architecture that is most suitable for a problem, and has characteristics of high training complexity and great performance improvement.

(14) Audio track

The audio track may be understood as an audio channel in audio data. Each audio track defines attributes of the audio track, such as a timbre, a timbre library, a quantity of channels, an input/output port, and a volume of the audio track.

(15) Subtitle

The subtitle is content such as dialogs displayed in a form of text in television shows, films, or stage works, and is also broadly texts added during post-production of audiovisual works. Explanation texts and various texts that appear at the bottom of a film screen or a television screen, for example, a film name, cast and crew list, lyrics, dialogs, description words, introduction of characters, place names, and eras are all referred to as subtitles.

(16) Optical character recognition (Optical Character Recognition, OCR) is a process in which an electronic device (for example, a scanner or a digital camera) examines a character printed on paper, determines a shape of the character by detecting dark and bright, and then translates the shape into a computer text by using a character recognition method. For example, for a printed character, a text in a paper document is converted into an image file of a black-and-white dot matrix in an optical manner, and the text in the image is converted into a text format by using recognition software, so that text processing software further edits and processes the text. How to rectify an error or use auxiliary information to improve recognition accuracy is a most important topic of OCR, and a noun of ICR (Intelligent Character Recognition) is also generated. Main indicators for evaluating performance of an OCR system include: rejection rate, misrecognition rate, recognition speed, user interface friendliness, product stability, usability, feasibility, and the like.

(17) Model convergence: After a plurality of rounds of iteration, an error between a predicted value and an actual value of a model is less than a preset small value.

The method provided in embodiments of this application may be performed on a server, or may be performed on a terminal device. The terminal device may be a mobile phone with an image processing function, a tablet personal computer (tablet personal computer, TPC), a media player, a smart television, a laptop computer (laptop computer, LC), a personal digital assistant (personal digital assistant, PDA), a personal computer (personal computer, PC), a camera, a video camera, a smartwatch, a wearable device (wearable device, WD), an autonomous vehicle, or the like. This is not limited in embodiments of this application.

The following describes a system architecture according to an embodiment of this application.

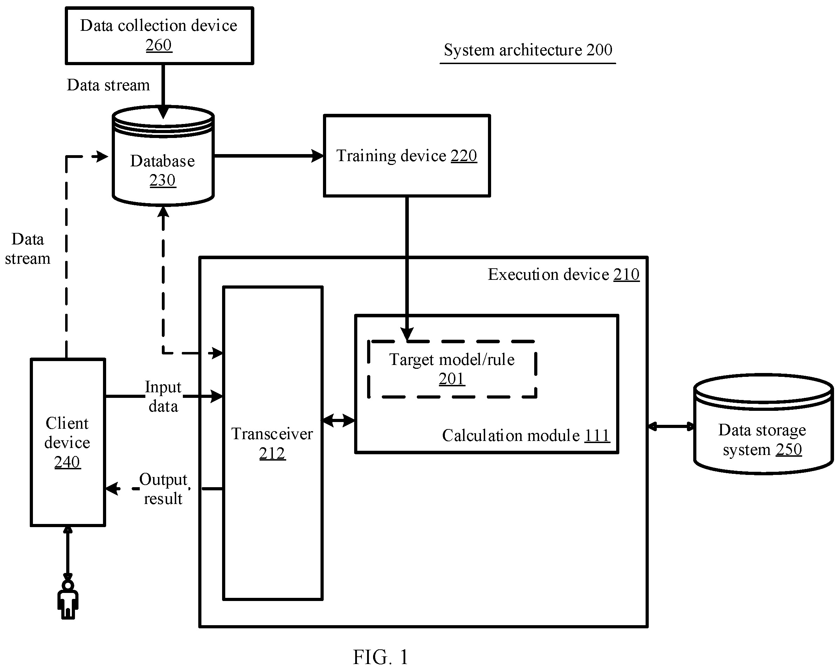

Refer to FIG. 1. An embodiment of this application provides a system architecture 200. As shown in the system architecture 200, a data collection device 260 may be configured to collect training data. After collecting the training data, the data collection device 260 stores the training data in a database 230, and a training device 220 obtains a target model/rule 201 through training based on the training data maintained in the database 230. The target model may be an encoding model described in this application.

The following describes how the training device 220 obtains the target model/rule 201 based on the training data. For example, the training device 220 implements data-based self-supervised learning, to complete training of the target model/rule 201. For details, refer to the training method in the following.

The target model/rule 201 in this embodiment of this application may be specifically a neural network. It should be noted that, in actual application, the training data maintained in the database 230 is not necessarily collected by the data collection device 260, and may alternatively be received from another device. In addition, it should be noted that the training device 220 may not train the target model/rule 201 entirely based on the training data maintained in the database 230, and may perform video grounding through obtaining training data from a cloud or another place. The foregoing description should not be construed as a limitation to embodiments of this application.

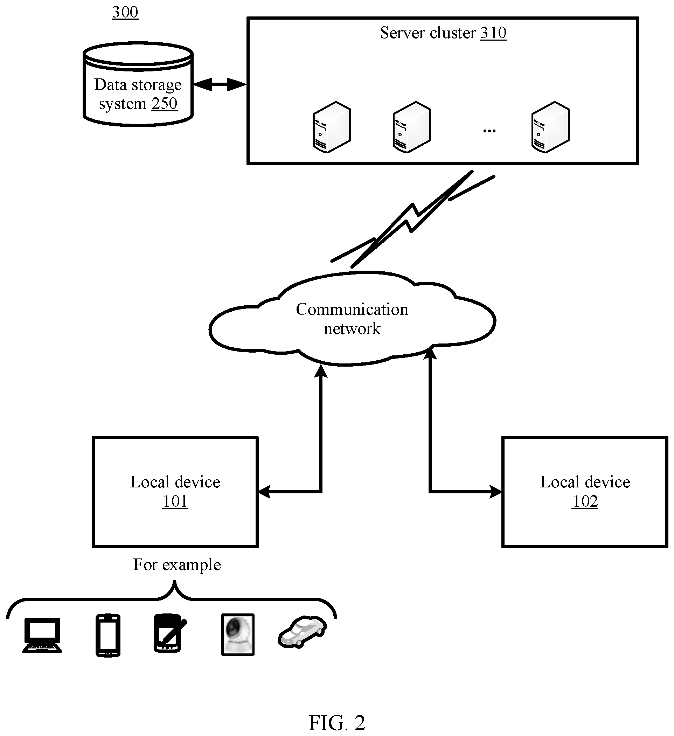

The target model/rule 201 obtained through training by the training device 220 may be used in different systems or devices, for example, an execution device 210 shown in FIG. 2. The execution device 210 may be a terminal, for example, a smart vehicle, a mobile phone terminal, a tablet computer, a laptop computer, augmented reality (augmented reality, AR)/virtual reality (virtual reality, VR), a vehicle-mounted terminal, or a television, or may be a server or a cloud. In FIG. 2, the execution device 210 is configured with a transceiver 212. The transceiver may include an input/output (input/output, I/O) interface or another wireless or wired communication interface, and is configured to exchange data with an external device. The I/O interface is used as an example. A user may input data to the I/O interface via a client device 240.

In a process in which the execution device 210 preprocesses the input data, or in a process in which a computing module 212 of the execution device 210 performs related processing like calculation, the execution device 210 may call data, code, and the like in a data storage system 250 for corresponding processing; and may also store, in the data storage system 250, data, instructions, and the like that are obtained through corresponding processing.

Finally, the I/O interface 212 returns a processing result to the client device 240, to provide the processing result for the user.

It should be noted that the training device 220 may generate corresponding target models/rules 201 for different targets or different tasks based on different training data. The corresponding target models/rules 201 may be used to implement the foregoing targets or complete the foregoing tasks, to provide a desired result for the user.

In a case shown in FIG. 1, the user may manually specify the input data, and the input data may be manually specified through an interface provided by the transceiver 212. In another case, the client device 240 may automatically send the input data to the transceiver 212. If it is required that the client device 240 needs to obtain a grant from the user for automatically sending the input data, the user may set corresponding permission in the client device 240. The user may view, on the client device 240, a result output by the execution device 210. Specifically, the result may be presented in a form of display, a sound, an action, or the like. The client device 240 may also be used as a data collection end to collect, as new sample data, the input data that is input to the transceiver 212 and an output result that is output from the transceiver 212 shown in the figure, and store the new sample data in the database 230. Certainly, the client device 240 may alternatively not perform collection, but the transceiver 212 directly stores, as new sample data in the database 230, the input data that is input to the transceiver 212 and the output result that is output from the transceiver 212 that are shown in the figure.

It should be noted that FIG. 2 is merely a diagram of a system architecture according to an embodiment of this application. A position relationship between a device, a component, a module, and the like shown in the figure constitutes no limitation. For example, in FIG. 2, the data storage system 250 is an external memory relative to the execution device 210. In another case, the data storage system 250 may alternatively be disposed in the execution device 210.

As shown in FIG. 1, a target model/rule 201 is obtained through training based on the training device 220. In this embodiment of this application, the target model/rule 201 may be a trained or updated video grounding model in this application.

For example, for a scenario in which the method provided in this application is applied to a cloud or a server, a system architecture to which the method provided in this application is applied may be shown in FIG. 2. In the system architecture 300, a server cluster 310 is implemented by one or more servers. Optionally, the server cluster 310 cooperates with another computing device, for example, a device such as a data storage or a router. The server cluster 310 may implement the steps of the method provided in this application by using the data in the data storage system 250 or by calling program code in the data storage system 250.

A user may operate respective user equipment (for example, a local device 101 and a local device 102) to interact with the server cluster 310. Each local device may represent any computing device, for example, a personal computer, a computer workstation, a smartphone, a tablet computer, an intelligent camera, a smart automobile, another type of cellular phone, a media consumption device, a wearable device, a set-top box, or a game console.

A local device of each user may interact with the server cluster 310 via a communication network of any communication mechanism/communication standard. The communication network may be a wide area network, a local area network, a point-to-point connection, or any combination thereof. Specifically, the communication network may include a wireless network, a wired network, a combination of a wireless network and a wired network, or the like. The wireless network includes but is not limited to any one or more of a 5th-generation (5th-generation, 5G) mobile communication technology system, a long term evolution (long term evolution, LTE) system, a global system for mobile communication (global system for mobile communication, GSM), a code division multiple access (code division multiple access, CDMA) network, a wideband code division multiple access (wideband code division multiple access, WCDMA) network, wireless fidelity (wireless fidelity, Wi-Fi), Bluetooth (Bluetooth), ZigBee (ZigBee), a radio frequency identification (radio frequency identification, RFID) technology, long range (Long Range, Lora) wireless communication, and near field communication (near field communication, NFC). The wired network may include an optical fiber communication network, a network including coaxial cables, or the like.

In another implementation, one or more aspects of the execution device 210 may be implemented by each local device. For example, the local device 101 may provide local data or feed back a computation result for the execution device 210.

It should be noted that all functions of the execution device 210 may also be implemented by the local device. For example, the local device 101 implements a function of the execution device 210 and provides a service for a user of the local device 101, or provides a service for a user of the local device 102.

An objective of a natural language-based temporal video grounding (Temporal Video Grounding) task is that given a query text and a video, a model finds, based on the query text, a video clip that best matches the query text in the video.

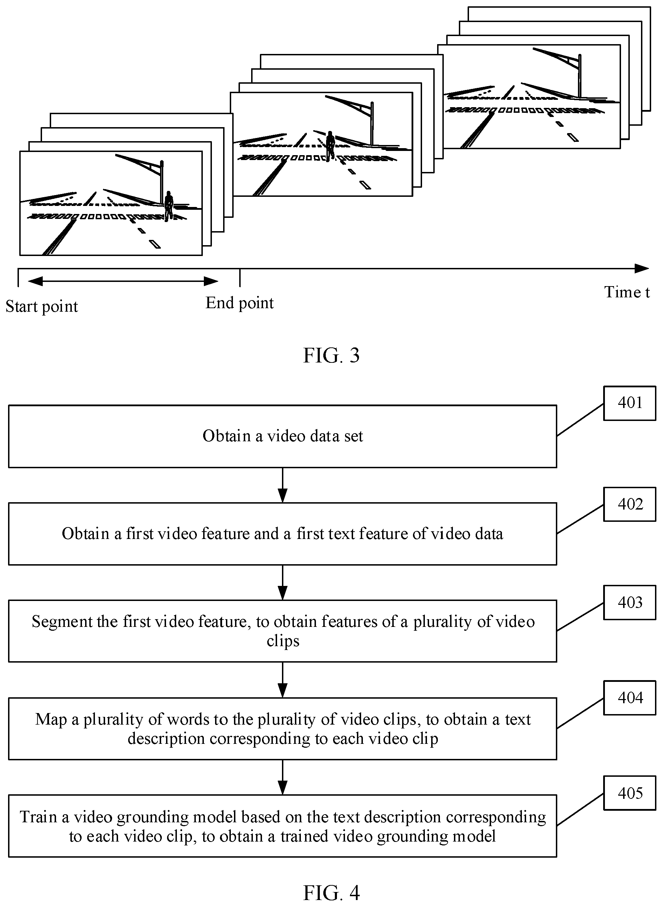

For example, as shown in FIG. 3, an input is a video and a given query text "a man crosses a road", and an output is a time start point and an end point of a clip that is most related to the query text in the video. Zero-shot temporal video grounding means that used training data includes only a video and does not include a query text. A main difficulty is enabling a temporal video grounding model to obtain good grounding effect on test data despite the lack of manual annotation of training data.

Temporal video grounding may be used in actual application scenarios such as data increment, website/app retrieval, and video creation. An existing supervised temporal video grounding solution requires a video training set with dense manual annotations, and therefore requires high data annotations costs. A model of a zero-shot temporal video grounding technology has low generalization, and cannot be applied to a dataset in a domain different from the training set.

For example, LocVTP is a video multi-modal pre-training solution for a temporal video grounding task. The entire model mainly includes a visual encoder, a text encoder, and a Context Warping Head, and follows a "pre-training+fine-tuning" paradigm in framework. In order to complete a downstream temporal video grounding task, three loss functions are designed in the pre-training stage: for example, coarse-grained comparison learning loss, fine-grained comparison learning loss, and time sequence-aware comparison learning loss. In a video grounding stage, the visual encoder and the text encoder are pre-trained. In a test stage, a pre-trained visual encoder and text encoder are used to extract a video of a downstream temporal video grounding dataset and query a text feature, then fine-tuning is performed on a temporal video grounding model by using training data of the downstream dataset, and finally, downstream test data is tested by using the fine-tuned temporal video grounding model.

However, LocVTP has limitations in both method and data. At a method level, the traditional "pre-training+fine-tuning" paradigm is followed. Only video and text features can be extracted, and the temporal video grounding model needs to be fine-tuned on a downstream dataset. Therefore, zero-slot testing cannot be implemented, and it is difficult for migration to different datasets. At a data level, image-text pair and video-text pair data used in the current video pre-training method are applicable to visual-text matching tasks such as classification, retrieval, and questions and answers, but not applicable to a temporal grounding task.

For another example, PSVL is a zero-slot temporal video grounding solution, and the PSVL mainly includes a training stage and a test stage. Training stage: A temporal event proposal module extracts a video clip that may include an event and a corresponding timestamp. Then, a pseudo-query generation module is configured to generate a noun and a verb for the video clip by using a large-scale text word library and a target detection model, to form a text description of the video clip. Finally, a temporal video grounding model NLVL model is trained by using the extracted video clip and timestamp, and the text description. Test stage: For a test set of temporal video grounding data, the text description is divided into a noun and a verb through part-of-speech annotation, to form a new text description, and then the video and the text description are input into a trained temporal video grounding model NLVL model to generate a predicted timestamp.

In the PSVL method, the temporal video grounding model is trained by using videos of downstream datasets, and the text description of the video clip is generated based on the existing target detection model. Therefore, text diversity is low (for example, the text are of 1600 categories). Therefore, the model is difficult to adapt to test data sets in different domains due to low generalization.

Therefore, this application provides a video grounding method, to perform training by using unannotated video data, so as to reduce annotation costs and greatly reduce labor overheads required for video grounding.

The following describes a method procedure provided in this application with reference to the foregoing system architecture and application scenario.

The video grounding method provided in this application may include a training stage and an inference stage. In the training stage, training video grounding may be performed by using unannotated video data, and in the inference stage, an inference process may be performed by using a model trained in the training phase. The training stage and the inference stage may be deployed on a same device, or may be deployed on different devices. This is not limited in this application. The following separately describes the training stage and the inference stage.

1. Training stage

FIG. 4 is a schematic flowchart of a video grounding method according to this application. The video grounding method is described as follows.

401: Obtain a video data set.

The video data set may include video data, and the video data may include a plurality of frames of images.

Optionally, to facilitate subsequent obtaining of a text related to a video, the video data set may further include video metadata. The video metadata may include but is not limited to information such as an audio track, a subtitle, or an OCR result, to facilitate subsequent extraction of the text related to the video.

The video data may be received data, or may be data read locally, and may be used for subsequent video grounding.

402: Obtain a first video feature and a first text feature of the video data.

After the video data set is obtained, feature extraction may be performed. Specifically, a feature may be extracted from the video data to obtain a video feature, which is referred to as the first video feature for ease of differentiation. A feature may be further extracted from a text corresponding to the video data, to obtain a text feature, which is referred to as the first text feature for ease of differentiation. The first text feature may include a plurality of texts. In this application, an example in which the first text feature includes a plurality of words is used for description.

Specifically, the video feature may be extracted from each frame of image in the video data, and the text feature may be extracted in a plurality of manners. For example, if the video data set further includes an audio track, speech recognition may be performed on data in an audio channel corresponding to the audio track, to obtain a text corresponding to speech of the audio track, and then a feature is extracted from the text, to obtain the text feature. For another example, if the video data set further includes a subtitle, for example, a separate subtitle file may be generated for the video data, the subtitle file may be translated, to obtain a subtitle text corresponding to the video, and then a feature is extracted from the subtitle text, to obtain the text feature. For another example, if the video data set further includes an OCR result, text recognition may be performed on the OCR result, to obtain a text used to describe the video data or a text included in the video data, and a feature may be extracted from the text, to obtain the text feature.

In a possible implementation, each frame of image in the video data may also be recognized, to obtain a text included in each frame of image, and a feature may be extracted from the text, to obtain the text feature.

Therefore, in this implementation of this application, the text included in the video data or the text describing the video data may be extracted in a plurality of manners. This may be applicable to a plurality of scenarios, and has a very strong generalization capability.

Specifically, during feature extraction, a feature may be extracted via a pre-trained feature extraction network. For example, a visual encoder and a text encoder that are connected to a cloud side in advance may be used for feature extraction, to extract an available feature from input data.

403: Segment the first video feature, to obtain features of a plurality of video clips.

After the first video feature is extracted, the first video feature may be segmented, to obtain a plurality of feature clips, that is, the features of the plurality of video clips.

Specifically, the video data may be segmented in a plurality of manners. For example, the video data may be segmented according to a preset length, to obtain the plurality of video clips. Alternatively, the video data may be segmented after clustering, and features of a same category are grouped into features of a same video clip, to obtain a plurality of video clips. Specifically, an adaptive video segmentation manner may be selected according to an actual application scenario.

404: Map the plurality of words to the plurality of video clips, to obtain a text description corresponding to each video clip.

After the plurality of video clips are obtained, the video clips may be aligned with texts in the text feature, to obtain the text description corresponding to each video clip.

Generally, during text feature extraction and video feature extraction, the extracted video feature and the extracted text feature generally do not reflect a dimension indicating a time sequence. Therefore, the text feature and the video feature can be aligned. Alternatively, it may be understood as mapping the plurality of words in the text feature to corresponding video clips, so that the text description corresponding to each video clip can be obtained.

Optionally, similarities between the plurality of words in the text feature and each video clip may be calculated. For example, a Euclidean distance or a cosine similarity may be calculated to indicate a similarity between a word and each video clip, and then a word corresponding to each video clip is determined based on the similarity. For example, N words with highest similarities may be selected for each video clip, where N is a positive integer, to obtain the text description corresponding to each video clip.

405: Train a video grounding model based on the text description corresponding to each video clip, to obtain a trained video grounding model.

After the text description corresponding to each video clip is determined, the text description corresponding to each video clip may be used as an annotation of each video clip, and supervised learning is performed on the video grounding model to obtain the trained video grounding model.

In an implementation of this application, a pre-trained model may be used to generate the annotation of each video clip, that is, the text description, without manual annotation, so that video grounding costs can be reduced. In addition, a reorganized video clip description is more diversified than that in the existing method, so that the pre-trained model has a strong generalization capability to adapt to downstream datasets in different domains. A zero-shot temporal video grounding test that cannot be completed by an existing pre-trained video model can be completed, and stronger generalization performance than the existing temporal video grounding model is implemented.

In a possible implementation, during training of the video grounding model, video data may be used as an input of the video grounding model, and a loss value of an output result of the video grounding model is calculated by using information about the text description corresponding to each video clip in the video data, so that the video grounding model is trained. One iteration is used as an example. The foregoing video data and a text to be queried (referred to as a first text description for ease of differentiation) may be used as training inputs to obtain an output result. The output result may include information about a video clip corresponding to the first text description, for example, a timestamp or a length. For ease of differentiation, the video clip may be referred to as a first video clip. A loss value between the output result and information about a second video clip is calculated. The second video clip is information about a video clip corresponding to the first description text.

Optionally, in one iteration, pre-trained feature extraction networks may be set in the video grounding model to extract a video feature and a text feature, which may be referred to as a second video feature and a second text feature for ease of differentiation. For example, a feature may be extracted from the video data via the pre-trained video feature extraction network, to obtain the second video feature, and the first text description is encoded or a feature is extracted by using a pre-trained text encoder, to obtain the second text feature. Subsequently, the second video feature and the second text feature may be fused according to an attention mechanism, to obtain a fused feature. The fused feature is used as an input of an output layer of the video grounding model, to obtain the output result, that is, the information about the video clip corresponding to the first text description, for example, a timestamp or a video length. Therefore, in this implementation of this application, the video grounding model may fuse the video feature and the text feature according to the attention mechanism, so that the video feature and the text feature are fused more accurately according to the attention mechanism.

Optionally, before the second video feature and the second text feature are fused according to the attention mechanism, the second video feature may also be encoded by using a context encoding module, or a context feature in the second video feature is extracted. When the second video feature and the second text feature are fused according to the attention mechanism, the context feature and the second text feature may be fused, so that fusion may be performed based on a feature including context semantics in the video feature and the text feature, and an obtained fused feature can describe a feature included in each video clip more accurately.

The foregoing describes the procedure of the training stage in the method provided in this application. The following further describes the procedure of the training stage in the method provided in this application with reference to a specific application scenario.

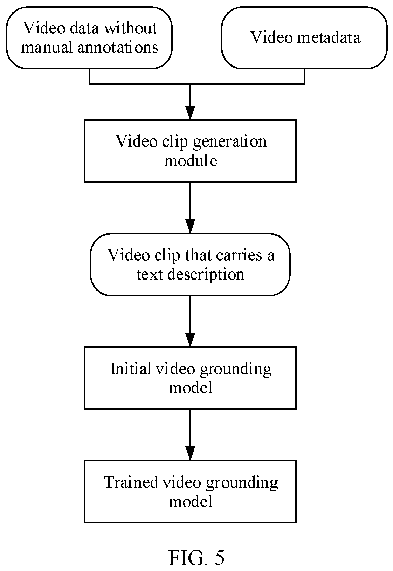

FIG. 5 is a schematic flowchart of another video grounding method according to this application.

First, video data without manual annotation and video metadata are obtained, and the video data and the video metadata are used as inputs of a video clip generation module, so that a video clip that carries a text description can be output. Then, an initial video grounding model is trained by using the video clip that carries the text description, to obtain a trained video grounding model.

More specifically, the training stage may include a plurality of parts, for example, a video clip generation part and a video grounding model update stage shown in FIG. 5.

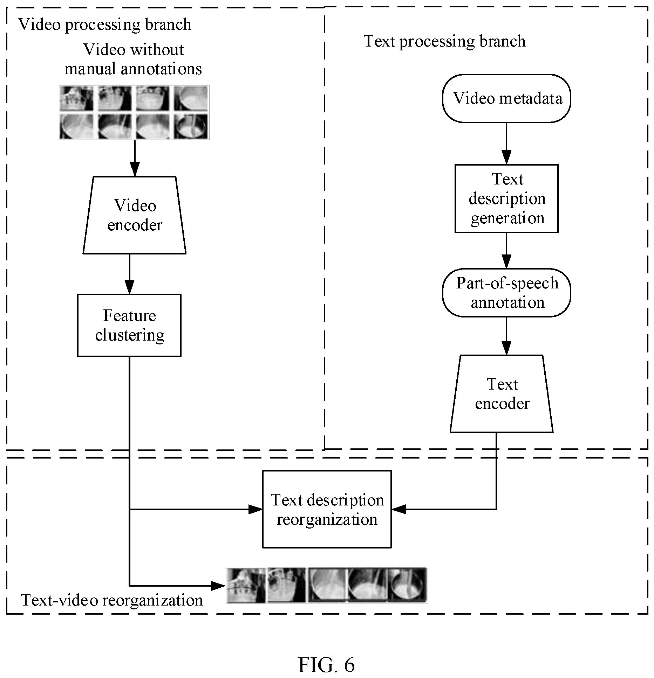

Steps of the video clip generation part may be shown in FIG. 6, and may specifically include a video processing branch and a text processing branch shown in FIG. 6. Then, text-video reorganization may be performed, and a video clip that carries a text description is output.

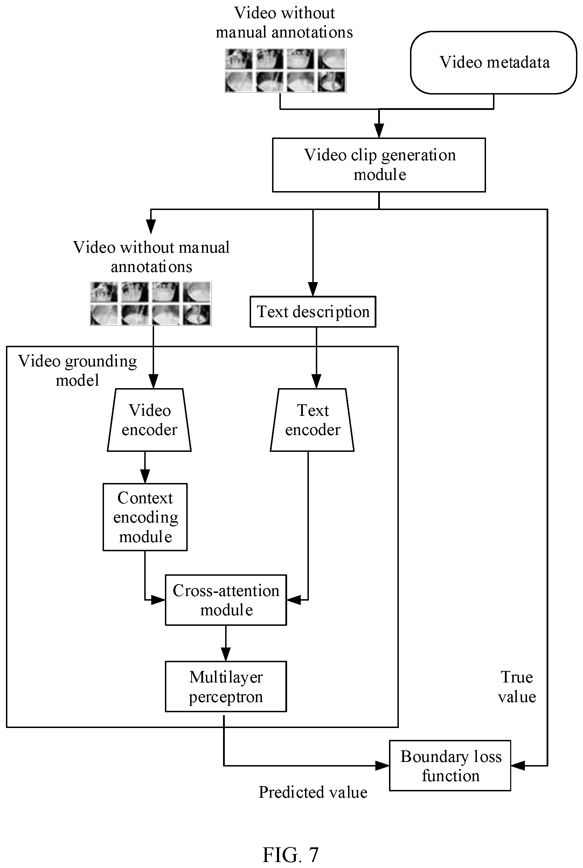

Steps in the update stage may be shown in FIG. 7. Video data without manual annotation and a text description used for training (referred to as a training text for ease of differentiation) are used as inputs of a video grounding model, and a predicted value, that is, information about a video clip that is predicted by the video grounding model and that corresponds to the text description, is output. A boundary loss function is then calculated based on the predicted value and the information about the video clip corresponding to the training text, and the video grounding model is updated based on the predicted value.

The following describes each stage with reference to the flowcharts shown in FIG. 6 and FIG. 7.

(1) Video processing branch

First, video data is used as an input of a visual encoder, and an extracted video feature may be output.

The visual encoder may be used to extract a feature from input video data, and output the extracted video feature. Alternatively, the visual encoder may also be referred to as a video feature extraction network, a video feature extractor, or the like. The visual encoder may be a network that is pre-trained and that is used to extract video features, to output features that can accurately describe a video.

Then, the video features are divided into features of a plurality of corresponding video clips, and timestamps of the corresponding video clips are output. For example, dual-encoder multi-modal model contrastive language-image pre-training (Contrastive Language-Image Pre-Training, CLIP) that has been pre-trained on large-scale image-text pairs may be used. That is, a CLIP model may be used to simultaneously extract features of an image and a text. Certainly, the model may be replaced with another pre-trained model. This is merely an example for description herein.

The video feature segmentation may be specifically performed in a manner of boundary detection, clustering (for example, K-means feature clustering), window sliding, or the like. In this application, for example, segmentation is performed in a feature clustering manner.

For video features, the video features may be clustered into features corresponding to several video clips in the feature clustering manner, to obtain the features of the video clips and the timestamps of the video clips.

Specifically, extracted video frame features $\{F_1, F_2, ..., F_p, ..., F_P\}$ and frame indexes $\{1, 2, ..., p, ..., P\}$ may be given, and feature clustering is performed according to a K-means clustering algorithm. To encourage adjacent frames to be in a same cluster with a higher probability to ensure time continuity of the video clip and avoid a scattered clustering result, the video frame features and frame index vectors may be connected as inputs of the K-means to obtain video clips $\{v_1, v_2, ..., v_n\}$ and timestamps $\{(t_1^s, t_1^e), (t_2^s, t_2^e), ..., (t_n^s, t_n^e)\}$ of the video clips. That is, grounding is performed on each video frame based on a frame index, so that adjacent frames can be recognized, and time continuity of a video clip can be improved.

(2) Text processing branch

In the text processing branch, an input is video metadata, and the video metadata may include but is not limited to an audio track, a subtitle, or OCR corresponding to video data. A source of the subtitle may be a subtitle file corresponding to the video data, or may be a subtitle obtained by performing image recognition on an image frame in a video. This may be specifically selected according to an actual application scenario.

For example, a text description of the entire video may be generated through a text description generation step, for example, represented as $\ell$, and a size of a data set is represented as N. Therefore, there are N video-text description pairs $(V_i, C_i)$, $i \in \{1, 2, ..., N\}$. For each video-text description pair, a video is formed by P frames $\{f_1, f_2, f_p, f_P\}$, and the text description is decomposed into Q words $\{w_1, w_2, ..., w_q, w_Q\}$-speech annotation.

(3) Text-video reorganization

Text descriptions may be reorganized by using corresponding noun features and verb features, and video clip features. That is, the text description corresponding to the entire video data is formed by using a word as a unit. Then, the text description may be aligned with the video data, and a text description corresponding to each video clip may be obtained.

For example, after the part-of-speech annotation, the text description is divided into Q (positive integer) words, which may specifically include I (positive integer) candidate nouns $\{noun_1, noun_2, ..., noun_i, noun_I\}$ and J

candidate verbs {$verb_1$, $verb_2$, ... , $verb_j$, ... , $verb_J$}.

The CLIP model may be used to provide an image text alignment function to help select a noun and a verb that are highly matched with the video clip, evaluate each word according to a similarity score (for example, a cosine similarity and a dot product similarity) between each word and the video clip, sort the words, then extract previous $N_1$ nouns from the candidate nouns, for example, select previous $N_1$ nouns with highest correlation, and extract previous $N_2$ verbs from the candidate verbs, for example, select previous $N_2$ verbs with highest correlation. Finally, the selected verbs and nouns are connected to form a final video clip text description C.

(4) Model update

After a video clip that carries a text description and a corresponding timestamp are obtained, the video clip that carries the text description and the corresponding timestamp may be used to perform video grounding.

Specifically, a video grounding model may encode a video without manual annotation by using a pre-trained visual encoder, and encode a text description by using a pre-trained text encoder. The visual encoder and the text encoder are the same as or different from the foregoing video processing branch and text processing branch, and may be specifically adjusted according to an actual application scenario. When the model is updated, the visual encoder and the text encoder may not need to be updated.

Then, a context encoding module is configured to model and perceive a video global context. For example, the context information in the video features may be extracted and fused by using the context encoding module, to obtain a video feature of each video frame that can be more accurately described with reference to features of adjacent video frames.

Subsequently, the text feature and the video feature may be fused by using a cross-attention module. The cross-attention module fuses the video feature and the text feature through attention mechanisms such as word-guided attention, video-guided attention, or multi-modal cross attention, to output a more accurate fused feature.

Then, the fused feature is input into a multi-layer perceptron, and a predicted timestamp of a video is output.

Subsequently, a loss value between the predicted timestamp and a true timestamp, that is, a value of a boundary loss function, may be calculated, and the video grounding model is reversely updated according to the value, to obtain an updated video grounding model. When the video grounding model is reversely updated, the context encoding module, the cross-attention module, the multilayer perceptron, and the like in the video grounding model may be specifically updated. Optionally, the visual encoder and the text encoder may be updated, or may not be updated. This may be specifically determined according to an actual application scenario. This is not limited in this application. For example, to improve training efficiency, pre-trained models may be used as the visual encoder and the text encoder in the video grounding model. Therefore, the pre-trained visual encoder and text encoder may be used in a model update stage.

Therefore, in this implementation of this application, video data is collected in a plurality of manners, and a large amount of training data can be obtained for video grounding without manual annotation. A zero-shot temporal video grounding test can be implemented, and stronger generalization performance than the existing temporal video grounding model is implemented. For a manner of generating a video clip text description only by using a visual signal, the video clip text description generated by using the method provided in this application is more accurate. In addition, a reorganized video clip description is more diversified, so that the pre-trained model has a strong generalization capability to adapt to downstream datasets in different domains.

2. Inference stage

In the foregoing training stage, the initial video grounding model is trained to obtain a trained video grounding model. In the inference stage, the trained video grounding model may be used to perform an inference process. The inference stage and the training stage may be deployed on a same device, or may be deployed on different devices.

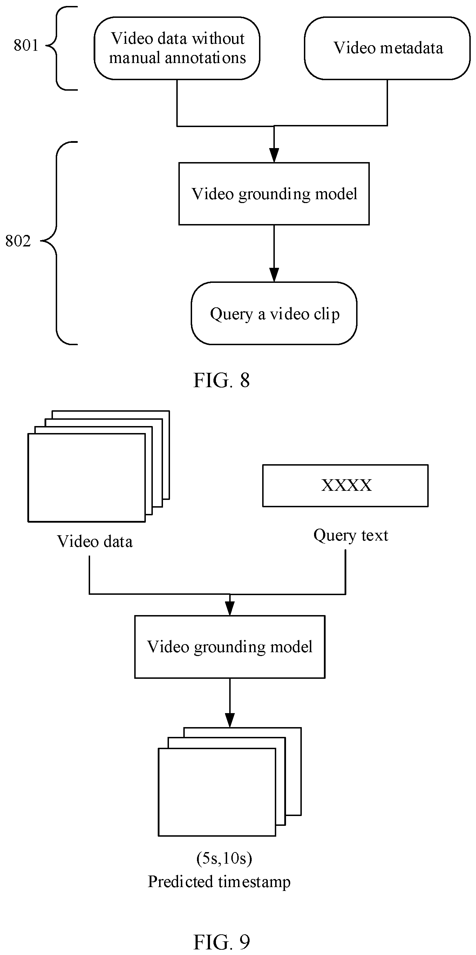

FIG. 8 is a schematic flowchart of a video grounding method according to this application. The video grounding method is described as follows.

801: Obtain video data and a query text.

The video data may include a plurality of frames of images, and the query text may be a text corresponding to a video clip that needs to be queried.

Optionally, the video data and the query text may be obtained from user input data. For example, if a trained video grounding model may be deployed on a terminal, a user may directly input the video data and the query text in the terminal. If the trained video grounding model is deployed on a server, a cloud platform, or the like, the user may perform inputting by using a client, and the server or the cloud platform may obtain the video data and the query text from received user input data.

In some possible scenarios, the video data may also be stored locally, and only the query text needs to be obtained from the user input data. For example, if the trained video grounding model is deployed on the terminal, and the video data is stored in the terminal, the user may only need to input, in the terminal, the text that needs to be queried.

802: The video data and the query text are used as inputs of the trained video grounding model, and a query video clip is output.

After the video data and the query text are obtained, the video data and the query text may be used as inputs of the video grounding model, and a video clip corresponding to the query text in the video data is recognized and output through the video grounding model. Specifically, information about the video clip may be output, for example, information such as a timestamp, a time window, a video start moment, and duration of the video clip.

For the trained video grounding model, refer to the foregoing description of the training stage. Details are not described herein again.

Therefore, in this implementation of this application, the video grounding model obtained through training in the foregoing training stage may be used to perform video grounding, for example, query a video clip corresponding to a text. A predicted timestamp can be directly generated without fine-tuning the model. This improves prediction efficiency and user experience.

For example, a video grounding procedure may be shown in FIG. 9. Video data and a corresponding query text are used as inputs of a trained temporal video grounding network, and a predicted timestamp is output, that is, a start time point and an end time point of a video clip most related to the query text are output. Therefore, zero-slot video grounding can be implemented without fine-tuning of the model.

In addition, the method provided in this application may be applied to a plurality of scenarios, for example, may be applied to scenarios including but not limited to surveillance video grounding, industrial grounding detection, video retrieval, data increment, and video creation. The following describes some possible application scenarios by using examples.

Scenario 1: Data increment

According to the method provided in this application, video data with rich metadata information can be automatically annotated, and a video clip generation module with a description automatically annotates a timestamp and a clip description of video data that is easily obtained, to add training set data required for video grounding in machine learning, and improve performance of a machine learning model.

Scenario 2: Video retrieval

The video grounding model may be deployed on each cloud platform or terminal. For example, a video grounding model obtained by using the method provided in this application may be deployed on a cloud platform or a terminal, and video retrieval may be performed by using a website, an APP, or the like. For example, a user may input a query text in the website or the APP, to obtain a video corresponding to the query text. For example, if the user inputs "dog, white", a large number of videos about "dog, white" can be found.

Scenario 3: Video creation

The video grounding model obtained by using the method provided in this application may be applied to automatic video editing, highlight video clip generation, or the like, to provide better experience for a user to use related software such as video creation and games.

Scenario 4: Surveillance video grounding

For example, in massive urban traffic surveillance videos, locating events that contain anomalous behavior (for example, robbery and fighting) or traffic incidents helps quickly determine time, location, and personnel in the events and improve operational efficiency.

Scenario 4: Industrial detection and grounding

According to the video grounding model obtained by using the method provided in this application, zero-shot video grounding can be implemented. Because industrial detection data is sparse, the model provided in this application has strong generalization, and can be applicable to industrial data detection. For example, videos on a pipeline can be analyzed in real time, key events such as a product defect and a machine fault are located, and efficiency of the manufacturing pipeline is improved.

The foregoing describes the method provided in this application. The following describes a structure of an apparatus that is provided in this application and that is configured to perform the foregoing method.

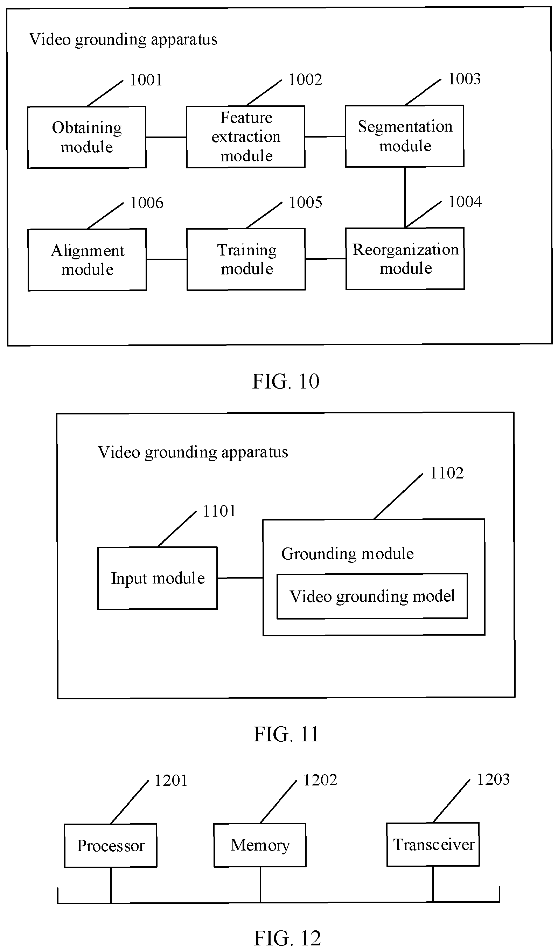

FIG. 10 is a diagram of a structure of a video grounding apparatus according to this application. The video grounding apparatus is described as follows.

An obtaining module 1001 is configured to obtain a video data set, where the video data set includes video data.

A feature extraction module 1002 is configured to obtain a first video feature and a first text feature of the video data, where the first text feature includes a plurality of words describing each frame of image in the video data.

A segmentation module 1003 is configured to segment the first video feature, to obtain a plurality of video clips.

A reorganization module 1004 is configured to map the plurality of words to the plurality of video clips, to obtain a text description corresponding to each video clip.

A training module 1005 is configured to train a video grounding model based on the text description corresponding to each video clip, to obtain a trained video grounding model, where the video grounding model is used to output information about a corresponding video clip based on input text.

In a possible implementation, the video data set further includes metadata corresponding to the video data, the metadata includes a text description corresponding to the video data, and the feature extraction module 1002 is specifically configured to: extract a feature from the video data via a video feature extraction network, to obtain the first video feature; and extract a feature from the text description via a text feature extraction network, to obtain the first text feature.

In a possible implementation, the metadata includes at least one of the following: an audio track, a subtitle, or an optical character recognition OCR result.

In a possible implementation, the segmentation module 1003 is specifically configured to cluster the first video feature, to obtain the plurality of video clips.

In a possible implementation, the reorganization module 1004 is specifically configured to: obtain similarities between the plurality of words and each video clip; and obtain, based on the similarities, the text description corresponding to each video clip.

In a possible implementation, the plurality of words include at least one noun and/or at least one verb, and the apparatus may further include:

an alignment module 1006, configured to: before the similarities between the plurality of words and each video clip are obtained, align a noun and/or verb in the plurality of words with each frame in the video data.

The reorganization module 1004 is specifically configured to obtain a similarity between each frame and the noun and/or verb aligned with each frame.

In a possible implementation, the training module 1005 is specifically configured to iteratively train the video grounding model based on the text description corresponding to each video clip. Any iterative training process includes:

using the video data and a first text description as inputs of a video grounding model updated in a previous iteration, to obtain an output result, where the output result includes information about a video clip corresponding to the first text description, and the first text description is a text description corresponding to the video data; obtaining a loss value between the output result and information about a second video clip, where the second video clip is the video clip corresponding to the first text description in the plurality of video clips; and updating, based on the loss value, the video grounding model updated in the previous iteration, to obtain a video grounding model updated in the current iteration.

In a possible implementation, the video grounding model updated in the previous iteration is specifically used to: extract a feature from the video data, to obtain a second video feature; extract a feature from the first text description, to obtain a second text feature; fuse the second video feature and the second text feature according to an attention mechanism, to obtain a fused feature; and use the fused feature as an input of an output layer, to output the output result.

In a possible implementation, the video grounding model updated in the previous iteration is specifically used to: extract context information from the first video feature, to obtain a context feature; and fuse the context feature and the second text feature according to an attention mechanism, to obtain the fused feature.

FIG. 11 is a diagram of a structure of another video grounding apparatus according to this application. The video grounding apparatus is described as follows.

An input module 1101 is configured to obtain video data and query text.

A grounding module 1102 is configured to use the video data and the query text as inputs of a trained video grounding model, and output information about a query video, where the query video is a video clip corresponding to the query text in the video data, the trained video grounding model is used to extract features from the video data and the query text respectively, to obtain a third video feature and a third text feature, fuse the third video feature and the third text feature according to an attention mechanism, use a fused feature as an input of an output layer, and output the information about the query video.

In a possible implementation, the trained video grounding model is a model obtained by training according to the implementations corresponding to FIG. 4 to FIG. 9.

FIG. 12 is a diagram of a structure of another video grounding apparatus according to this application. The video grounding apparatus is described as follows.

The video grounding apparatus may include a processor 1201 and a memory 1202. The processor 1201 and the memory 1202 are interconnected through a line. The memory 1202 stores program instructions and data.

The memory 1202 stores the program instructions and the data corresponding to steps in FIG. 4 to FIG. 7.

The processor 1201 is configured to perform the method steps performed by the video grounding apparatus shown in any one of the embodiments in FIG. 4 to FIG. 7.

Optionally, the video grounding apparatus may further include a transceiver 1203, configured to receive or send data.

An embodiment of this application further provides a computer-readable storage medium. The computer-readable storage medium stores a program. When the program is run on a computer, the computer is enabled to perform the steps in the methods described in embodiments shown in FIG. 4 to FIG. 7.

Optionally, the video grounding apparatus shown in FIG. 12 is a chip.

An embodiment of this application further provides a video grounding apparatus. The video grounding apparatus may also be referred to as a digital processing chip or a chip. The chip includes a processing unit and a communication interface. The processing unit obtains program instructions through the communication interface, and when the program instructions are executed by the processing unit, the processing unit is configured to perform the method steps performed by the video grounding apparatus in any one of the foregoing embodiments in FIG. 4 to FIG. 7.

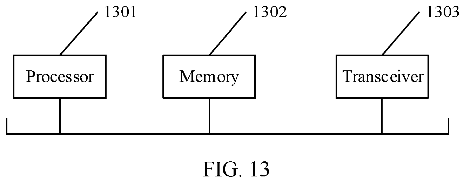

FIG. 13 is a diagram of a structure of another video grounding apparatus according to this application. The video grounding apparatus is described as follows.

The training apparatus may include a processor 1301 and a memory 1302. The processor 1301 and the memory 1302 are interconnected through a line. The memory 1302 stores program instructions and data.

The memory 1302 stores program instructions and data of the steps performed by the video grounding apparatus in FIG. 8 and FIG. 9.

The processor 1301 is configured to perform the method steps performed by the video grounding apparatus in FIG. 8 and FIG. 9.

Optionally, the video grounding apparatus may further include a transceiver 1303, configured to receive or send data.

An embodiment of this application further provides a computer-readable storage medium. The computer-readable storage medium stores a program. When the program is run on a computer, the computer is enabled to perform the steps in the methods described in embodiments shown in FIG. 8 and FIG. 9.

Optionally, the video grounding apparatus shown in FIG. 13 is a chip.

An embodiment of this application further provides a video grounding apparatus. The training apparatus may also be referred to as a digital processing chip or a chip. The chip includes a processing unit and a communication interface. The processing unit obtains program instructions through the communication interface, and when the program instructions are executed by the processing unit, the processing unit is configured to perform the method steps in any embodiment in FIG. 6.

An embodiment of this application further provides a digital processing chip. The digital processing chip integrates one or more interfaces and a circuit that is configured to implement the processor 1201 and the processor 1301, or functions of the processor 1201 and the processor 1301. When a memory is integrated into the digital processing chip, the digital processing chip may implement the method steps in any one or more embodiments in the foregoing embodiments. When a memory is not integrated into the digital processing chip, the digital processing chip may be connected to an external memory through a communication interface. The digital processing chip implements, according to program code stored in the external memory, the video grounding apparatus or the actions performed by the video grounding apparatus in the foregoing embodiments.

An embodiment of this application further provides a computer program product. When the computer program product is run on a computer, the computer is enabled to perform the steps of the methods described in the embodiments shown in FIG. 4 to FIG. 7 or FIG. 8 and FIG. 9.

The video grounding apparatus or the video grounding apparatus provided in embodiments of this application may be specifically a chip. The chip includes a processing unit and a communication unit. The processing unit may be, for example, a processor, and the communication unit may be, for example, an input/output interface, a pin, or a circuit. The processing unit may execute the computer executable instructions stored in a storage unit, so that a chip in a server performs the method described in the embodiments shown in FIG. 4 to FIG. 7 or FIG. 8 and FIG. 9. Optionally, the storage unit is a storage unit in the chip, for example, a register or a cache; or the storage unit may be a storage unit that is in a radio access device end and that is located outside the chip, for example, a read-only memory (read-only memory, ROM), another type of static storage device capable of storing static information and instructions, or a random access memory (random access memory, RAM).

Specifically, the processing unit or the processor may be a central processing unit (central processing unit, CPU), a neural-network processing unit (neural-network processing unit, NPU), a graphics processing unit (graphics processing unit, GPU), a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general purpose processor may be a microprocessor or any regular processor or the like.

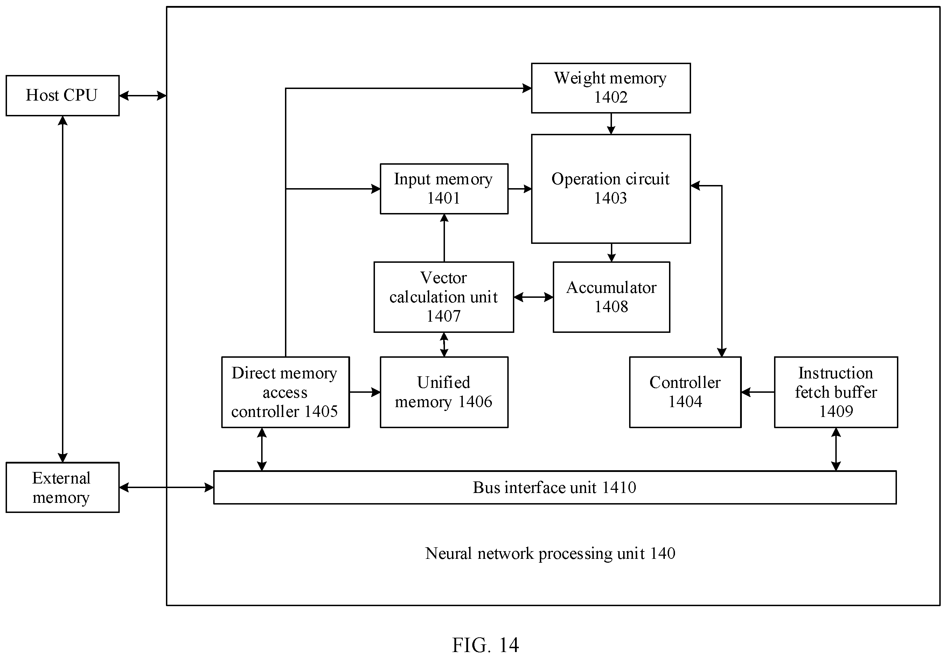

For example, FIG. 14 is a diagram of a structure of a chip according to an embodiment of this application. The chip may be represented as a neural network processing unit NPU 140. The NPU 140 is mounted to a host CPU (Host CPU) as a coprocessor, and the Host CPU allocates a task. A core part of the NPU is an operation circuit 1403. The operation circuit 1403 is controlled by a controller 1404 to extract matrix data in a memory and perform a multiplication operation.

In some implementations, the operation circuit 1403 includes a plurality of processing engines (process engine, PE). In some implementations, the operation circuit 1403 is a two-dimensional systolic array. The operation circuit 1403 may be alternatively a one-dimensional systolic array or another electronic circuit capable of performing mathematical operations such as multiplication and addition. In some implementations, the operation circuit 1403 is a general-purpose matrix processor.

For example, it is assumed that there are an input matrix A, a weight matrix B, and an output matrix C. The operation circuit fetches, from a weight memory 1402, data corresponding to the matrix B, and buffers the data on each PE in the operation circuit. The operation circuit fetches data of the matrix A from an input memory 1401 to perform a matrix operation on the matrix B, and stores an obtained partial result or an obtained final result of the matrix in an accumulator (accumulator) 1408.

A unified memory 1406 is configured to store input data and output data. The weight data is directly transferred to the weight memory 1402 through a direct memory access controller (direct memory access controller, DMAC) 1405. The input data is also transferred to the unified memory 1406 through the DMAC.

A bus interface unit (bus interface unit, BIU) 1410 is configured to interact with the DMAC and an instruction fetch buffer (instruction fetch buffer, IFB) 1409 through an AXI bus.

The bus interface unit (bus interface unit, BIU) 1410 is used by the instruction fetch buffer 1409 to obtain instructions from an external memory, and is further used by the direct memory access controller 1405 to obtain original data of the input matrix A or the weight matrix B from the external memory.

The DMAC is mainly configured to transfer input data in the external memory DDR to the unified memory 1406, or transfer weight data to the weight memory 1402, or transfer input data to the input memory 1401.

A vector calculation unit 1407 includes a plurality of operation processing units; and if necessary, performs further processing such as vector multiplication, vector addition, an exponential operation, a logarithmic operation, or value comparison on an output of the operation circuit. The vector calculation unit 1407 is mainly configured to perform network calculation at a non-convolutional/fully connected layer in a neural network, for example, batch normalization (batch normalization), pixel-level summation, and upsampling on a feature map.

In some implementations, the vector calculation unit 1407 can store a processed output vector in the unified memory 1406. For example, the vector calculation unit 1407 may apply a linear function and/or a nonlinear function to the output of the operation circuit 1403, for example, perform linear interpolation on a feature map extracted at a convolutional layer, and for another example, accumulate vectors of values to generate an activation value. In some implementations, the vector calculation unit 1407 generates a normalized value, a value obtained through pixel-level summation, or a combination thereof. In some implementations, the processed output vector can be used as an activated input to the operation circuit 1403. For example, the processed output vector can be used at a subsequent layer in the neural network.

The instruction fetch buffer (instruction fetch buffer) 1409 connected to the controller 1404 is configured to store instructions used by the controller 1404.

The unified memory 1406, the input memory 1401, the weight memory 1402, and the instruction fetch buffer 1409 are all on-chip memories. The external memory is private for a hardware architecture of the NPU.

An operation at each layer in the recurrent neural network may be performed by the operation circuit 1403 or the vector calculation unit 1407.

The processor described above may be a general-purpose central processing unit, a microprocessor, an ASIC, or a program used by one or more integrated circuits to control the methods in FIG. 4 to FIG. 7 or FIG. 8 and FIG. 9.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk (solid-state disk, SSD)), or the like.

In the specification, claims, and accompanying drawings of this application, the terms "first", "second", "third", "fourth", and the like are intended to distinguish between similar objects but do not necessarily indicate a specific order or sequence. It should be understood that the data termed in such a way are interchangeable in proper circumstances so that embodiments described herein can be implemented in other orders than the order illustrated or described herein. In addition, the terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

Finally, it should be noted that the foregoing descriptions are merely specific implementations of this application, but the protection scope of this application is not limited thereto. Any variation or replacement readily figured out by a person skilled in the art within the technical scope disclosed in this application shall fall within the protection scope of this application.

**Claims**

1.   A video grounding method, comprising:

   obtaining a video data set, wherein the video data set comprises video data;
   obtaining a first video feature and a first text feature of the video data, wherein the first text feature comprises a plurality of words describing each frame of image in the video data, and the first video feature is a feature extracted from the video data;

segmenting the first video feature, to obtain features of a plurality of video clips;
mapping the plurality of words to the features of the plurality of video clips, to obtain a text description corresponding to each video clip; and
training a video grounding model based on the text description corresponding to each video clip, to obtain a trained video grounding model, wherein the video grounding model is used to output information about a corresponding video clip based on an input text.

2.   The method according to claim 1, wherein the video data set further comprises metadata corresponding to the video data, the metadata comprises a text description corresponding to the video data, and obtaining the first video feature and the first text feature of the video data comprises:

   extracting a feature from the video data via a video feature extraction network, to obtain the first video feature; and
   extracting a feature from the text description via a text feature extraction network, to obtain the first text feature.

3.   The method according to claim 2, wherein the metadata comprises at least one of the following: an audio track, a subtitle, or an optical character recognition OCR result.

4.   The method according to any one of claims 1 to 3, wherein segmenting the first video feature, to obtain the plurality of video clips comprises:
   clustering the first video feature, to obtain the plurality of video clips.

5.   The method according to claim 1, wherein mapping the plurality of words to the plurality of video clips, to obtain the text description corresponding to each video clip comprises:

   obtaining similarities between the plurality of words and a feature of each video clip; and
   obtaining, based on the similarities, the text description corresponding to each video clip.

6.   The method according to claim 5, wherein the plurality of words comprise at least one noun and/or at least one verb, and before obtaining the similarities between the plurality of words and the feature of each video clip, the method further comprises:

   aligning a noun and/or verb in the plurality of words with each frame in the video data; and
   obtaining the similarities between the plurality of words and the feature of each video clip comprises:

obtaining a similarity between a feature of each frame and the noun and/or verb aligned with each frame.

7. The method according to any one of claims 1 to 6, wherein training the video grounding model based on the text description corresponding to each video clip comprises:

iteratively training the video grounding model based on the text description corresponding to each video clip, wherein
any iterative training process comprises:

using the video data and a first text description as inputs of a video grounding model updated in a previous iteration, to obtain an output result, wherein the output result comprises information about a video clip corresponding to the first text description, and the text description corresponding to the video data comprises the first text description;
obtaining a loss value between the output result and information about a second video clip, wherein the second video clip is the video clip corresponding to the first text description in the plurality of video clips; and
updating, based on the loss value, the video grounding model updated in the previous iteration, to obtain a video grounding model updated in the current iteration.

8. The method according to claim 7, wherein the video grounding model updated in the previous iteration is used to:

extract a feature from the video data, to obtain a second video feature;
extract a feature from the first text description, to obtain a second text feature;
fuse the second video feature and the second text feature according to an attention mechanism, to obtain a fused feature; and
use the fused feature as an input of an output layer, to output the output result.

9. The method according to claim 8, wherein fusing the second video feature and the second text feature according to the attention mechanism, to obtain the fused feature comprises:

extracting context information from the first video feature, to obtain a context feature; and
fusing the context feature and the second text feature according to the attention mechanism, to obtain the fused feature.

10. A video grounding method, comprising:

obtaining video data and a query text; and
using the video data and the query text as inputs of a trained video grounding model, and outputting information about a query video, wherein the query video is a video clip corresponding to the query text in the video data, the trained video grounding model is used to extract features from the video data and the query text respectively, to obtain a third video feature and a third text feature, fuse the third video feature and the third text feature according to an attention mechanism, use a fused feature as an input of an output layer, and output the information about the query video.

11. The method according to claim 10, wherein the trained video grounding model is a model obtained through training by using the method according to any one of claims 1 to 9.

12. A video grounding apparatus, comprising:

an obtaining module, configured to obtain a video data set, wherein the video data set comprises video data;
a feature extraction module, configured to obtain a first video feature and a first text feature of the video data, wherein the first text feature comprises a plurality of words describing each frame of image in the video data, and the first video feature is a feature extracted from the video data;
a segmentation module, configured to segment the first video feature, to obtain features of a plurality of video clips;
a reorganization module, configured to map the plurality of words to the features of the plurality of video clips, to obtain a text description corresponding to each video clip; and
a training module, configured to train a video grounding model based on the text description corresponding to each video clip, to obtain a trained video grounding model, wherein the video grounding model is used to output information about a corresponding video clip based on an input text.

13. The apparatus according to claim 12, wherein the video data set further comprises metadata corresponding to the video data, the metadata comprises a text description corresponding to the video data, and the feature extraction module is specifically configured to:

extract a feature from the video data via a video feature extraction network, to obtain the first video feature; and
extract a feature from the text description via a text feature extraction network, to obtain the first text feature.

14. The apparatus according to claim 13, wherein the metadata comprises at least one of the following: an audio track, a subtitle, or an optical character recognition OCR result.

15. The apparatus according to any one of claims 12 to 14, wherein
the segmentation module is specifically configured to cluster the first video feature, to obtain the plurality of video clips.

16. The apparatus according to claim 12, wherein the reorganization module is specifically configured to:

obtain similarities between the plurality of words and each video clip; and
obtain, based on the similarities, the text description corresponding to each video clip.

17. The apparatus according to claim 16, wherein the plurality of words comprises at least one noun and/or at least one verb, and the apparatus further comprises:

an alignment module, configured to: before the similarities between the plurality of words and each video clip are obtained, align a noun and/or verb in the plurality of words with each frame in the video data, wherein
the reorganization module is specifically configured to obtain a similarity between each frame and the noun and/or verb aligned with each frame.

18. The apparatus according to any one of claims 12 to 17, wherein the training module is specifically configured to:

iteratively train the video grounding model based on the text description corresponding to each video clip, wherein
any iterative training process comprises:

using the video data and a first text description as inputs of a video grounding model updated in a previous iteration, to obtain an output result, wherein the output result comprises information about a video clip corresponding to the first text description, and the first text description is a text description corresponding to the video data;
obtaining a loss value between the output result and information about a second video clip, wherein the second video clip is the video clip corresponding to the first text description in the plurality of video clips; and updating, based on the loss value, the video grounding model updated in the previous iteration, to obtain a video grounding model updated in the current iteration.

19. The apparatus according to claim 18, wherein the video grounding model updated in the previous iteration is used to:

extract a feature from the video data, to obtain a second video feature;
extract a feature from the first text description, to obtain a second text feature;
fuse the second video feature and the second text feature according to an attention mechanism, to obtain a fused feature; and
use the fused feature as an input of an output layer, to output the output result.

20. The apparatus according to claim 19, wherein the video grounding model updated in the previous iteration is specifically used to:

extract context information from the first video feature, to obtain a context feature; and
fuse the context feature and the second text feature according to the attention mechanism, to obtain the fused feature.

21. A video grounding apparatus, comprising:

an input module, configured to obtain video data and a query text; and
a grounding module, configured to use the video data and the query text as inputs of a trained video grounding model, and output information about a query video, wherein the query video is a video clip corresponding to the query text in the video data, the trained video grounding model is used to extract features from the video data and the query text respectively, to obtain a third video feature and a third text feature, fuse the third video feature and the third text feature according to an attention mechanism, use a fused feature as an input of an output layer, and output the information about the query video.

22. The apparatus according to claim 21, wherein the trained video grounding model is a model obtained through training by using the method according to any one of claims 1 to 9.

23. A video grounding apparatus, comprising a processor, wherein the processor is coupled to a memory, the memory stores a program, and when program instructions stored in the memory are executed by the processor, the method according to any one of

**EP 4 779 493 A1**

claims 1 to 9 is implemented.

24. A video grounding apparatus, comprising a processor, wherein the processor is coupled to a memory, the memory stores a program, and when program instructions stored in the memory are executed by the processor, the method according to either of claims 10 and 11 is implemented.

25. A computer-readable storage medium, comprising a program, wherein when the program is executed by a processing unit, the method according to any one of claims 1 to 9 or either of claims 10 and 11 is performed.

26. A computer program product, comprising a computer program, wherein when the computer program is executed by a processor, the method according to any one of claims 1 to 9 or either of claims 10 and 11 is implemented.

FIG. 1

300

Server cluster 310

Data storage system 250

...

Communication network

Local device 101

Local device 102

For example

FIG. 2

Start point    End point    Time t

FIG. 3

| | |
|---|---|
| Obtain a video data set | 401 |
| Obtain a first video feature and a first text feature of video data | 402 |
| Segment the first video feature, to obtain features of a plurality of video clips | 403 |
| Map a plurality of words to the plurality of video clips, to obtain a text description corresponding to each video clip | 404 |
| Train a video grounding model based on the text description corresponding to each video clip, to obtain a trained video grounding model | 405 |

FIG. 4

Video data without
manual annotations

Video metadata

Video clip generation
module

Video clip that carries a
text description

Initial video grounding
model

Trained video grounding
model

FIG. 5

Video processing branch

Video without manual annotations

Video encoder

Feature clustering

Text processing branch

Video metadata

Text description generation

Part-of-speech annotation

Text encoder

Text description reorganization

Text-video reorganization

FIG. 6

FIG. 7

FIG. 8

(5s,10s)
Predicted timestamp

FIG. 9

Video grounding apparatus

```
Obtaining          Feature          Segmentation
module             extraction       module
1001               module           1003
                   1002

Alignment          Training         Reorganization
module             module           module
1006               1005             1004
```

FIG. 10

Video grounding apparatus

```
Input module      Grounding module
1101              1102
                  Video grounding model
```

FIG. 11

```
Processor         Memory           Transceiver
1201              1202             1203
```

FIG. 12

| Processor | Memory | Transceiver |

FIG. 13

FIG. 14

## INTERNATIONAL SEARCH REPORT

| | International application No. |
|---|---|
| | **PCT/CN2024/119416** |

**A.    CLASSIFICATION OF SUBJECT MATTER**

G06F 16/78(2019.01)i

According to International Patent Classification (IPC) or to both national classification and IPC

**B.    FIELDS SEARCHED**

Minimum documentation searched (classification system followed by classification symbols)

IPC： G06F

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, IEEE: 视频, 定位, 特征, 文本, 切分, 片段, 词, 模型, 网络, 训练, 相似度, video, position, feature, text, segment, clip, word, model, network, train, similarity

**C.    DOCUMENTS CONSIDERED TO BE RELEVANT**

| Category* | Citation of document, with indication, where appropriate, of the relevant passages | Relevant to claim No. |
|---|---|---|
| PX | CN 117453949 A (HUAWEI TECHNOLOGIES CO., LTD.) 26 January 2024 (2024-01-26) claims 1-26 | 1-26 |
| X | CN 114627402 A (HUNAN UNIVERSITY) 14 June 2022 (2022-06-14) description, paragraphs [0002]-[0074], and figures 1-5 | 1-26 |
| A | CN 116127132 A (XIDIAN UNIVERSITY) 16 May 2023 (2023-05-16) entire document | 1-26 |
| A | US 2021142069 A1 (CAMBRICON TECHNOLOGIES CORP., LTD.) 13 May 2021 (2021-05-13) entire document | 1-26 |

☐ Further documents are listed in the continuation of Box C.      ☑ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | "&"  document member of the same patent family |
| "P"  document published prior to the international filing date but later than the priority date claimed | |

| Date of the actual completion of the international search | Date of mailing of the international search report |
|---|---|
| **29 November 2024** | **27 December 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/119416**

| Patent document cited in search report | | | Publication date (day/month/year) | Patent family member(s) | | | Publication date (day/month/year) |
|---|---|---|---|---|---|---|---|
| CN | 117453949 | A | 26 January 2024 | None | | | |
| CN | 114627402 | A | 14 June 2022 | None | | | |
| CN | 116127132 | A | 16 May 2023 | None | | | |
| US | 2021142069 | A1 | 13 May 2021 | EP | 3796189 | A1 | 24 March 2021 |
| | | | | WO | 2019219083 | A1 | 21 November 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311232024